# EUROPEAN PATENT APPLICATION

(11) **EP 4 808 259 A1**
(43) Date of publication of application: **16.09.2026**
(21) Application number: 24896614.5
(22) Date of filing: 27.11.2024
(51) Int. Cl.: H04W 76/00

(54) **COMMUNICATION METHOD AND COMMUNICATION APPARATUS**

(30) Priority: 01.12.2023 CN 202311648584
(71) Applicant: Huawei Technologies Co., Ltd., Shenzhen, Guangdong 518129 (CN)
(72) Inventor: HU, Yajie, Shenzhen, Guangdong 518129 (CN); YING, Jiangwei, Shenzhen, Guangdong 518129 (CN); GE, Cuili, Shenzhen, Guangdong 518129 (CN)
(74) Representative: Gill Jennings & Every LLP
(86) International application number: PCT/CN2024/135067
(87) International publication number: WO 2025/113528

(57) **Abstract**

This application provides a communication method and a communication apparatus. The communication method includes: A first network element sends sensing data to an NEF network element. Correspondingly, the NEF network element sends the sensing data to an AF network element after receiving the sensing data. In other words, in the technical solution provided in this application, the first network element may expose the sensing data to the AF network element through the NEF network element.

## Description

This application claims priority to Chinese Patent Application No. 202311648584.9, filed with the China National Intellectual Property Administration on December 1, 2023 and entitled "COMMUNICATION METHOD AND COMMUNICATION APPARATUS", which is incorporated herein by reference in its entirety.

### TECHNICAL FIELD

Embodiments of this application relate to the communication field, and in particular, to a communication method and a communication apparatus.

### BACKGROUND

With continuous development of communication technologies, requirements for communication systems having sensing capabilities are emerging gradually. For example, in some scenarios of smart cities and smart transportation, requirements for obtaining sensing data such as relative locations between objects and speeds and shapes of objects emerge gradually. The sensing data is data indicating a sensing result.

However, for the communication systems having the sensing capabilities, how to transmit the sensing data becomes a technical problem to be urgently resolved.

### SUMMARY

This application provides a communication method, to transmit sensing data.

According to a first aspect, this application provides a communication method. The method is applied to an NEF network element, and includes: receiving sensing data from a first network element; and sending the sensing data to an application function AF network element.

In this embodiment, the sensing data may be understood as a sensing result obtained after a communication system performs sensing.

It should be noted herein that a type of sensing is not limited in this embodiment. For example, the type of sensing includes but is not limited to at least one of the following: an intrusion detection type of sensing, a traffic detection type of sensing, a path tracking type of sensing, a collision detection type of sensing, a positioning type of sensing, and a speed measurement type of sensing. In this embodiment, different types of sensing are also referred to as different types of sensing services. For example, the intrusion detection type of sensing is also referred to as an intrusion detection type of sensing service, the traffic detection type of sensing is also referred to as a traffic detection type of sensing service, and the collision detection type of sensing is also referred to as a collision detection type of sensing service.

In this embodiment, the first network element sends the sensing data to the NEF network element. Correspondingly, the NEF network element receives the sensing data sent by the first network element. For example, the sensing data may include but is not limited to at least one of the following: an intrusion detection type of sensing data, a traffic detection type of sensing data, a path tracking type of sensing data, a collision detection type of sensing data, a positioning type of sensing data, and a speed measurement type of sensing data.

In this embodiment, the first network element sends the sensing data to the NEF network element, so that the NEF network element can provide the sensing data for the AF network element. That is, in this embodiment, the first network element exposes the sensing data to the NEF network element, and then the NEF network element exposes the sensing data to the AF network element. Alternatively, in other words, in this embodiment, the first network element may expose the sensing data to the AF network element through the NEF network element.

In some embodiments, before the first network element in this application sends the sensing data to the NEF network element, the AF network element first sends first information to the NEF network element, where the first information indicates the AF network element to request to subscribe to the sensing data. Correspondingly, after receiving the first information, the NEF network element sends second information to the first network element, where the second information indicates the AF network element to request to subscribe to the sensing data.

Alternatively, in other words, in this embodiment, the first network element obtains the sensing data from a second network element and sends the sensing data to the NEF network element only when the first network element receives the second information that is sent by the NEF network element and that indicates the AF network element to request to subscribe to the sensing data.

In some embodiments, the first information and the second information include first indication information, and the first indication information indicates a sensing service type of the sensing data that is requested to be subscribed to. For example, the sensing service type indicated by the first indication information includes but is not limited to at least one of the following: an intrusion detection type of sensing service, a traffic detection type of sensing service, a path tracking type of sensing service, a collision detection type of sensing service, a positioning type of sensing service, and a speed measurement type of sensing service.

In this embodiment, when requesting to subscribe to the sensing data, the AF network element indicates sensing data, of a specific type of sensing service, that is requested to be subscribed to. In this embodiment, after the AF indicates the sensing service type of the sensing data that is requested to be subscribed to, when sending the sensing data to the NEF network element, the first network element sends the requested sensing data of the sensing service type, that is, the first network element exposes, to the AF network element through the NEF network element, the sensing data, of the sensing service type, that is requested to be subscribed to by the AF network element.

In some embodiments, the first information sent by the AF network element further includes second indication information, and the second indication information indicates content to be included in the sensing data that is requested to be subscribed to.

In this embodiment, when requesting to subscribe to the sensing data, the AF network element further indicates, in addition to indicating sensing data, of a specific type of sensing service, that is requested to be subscribed to, the content to be included in the sensing data that is requested to be subscribed to. For example, when the AF network element requests sensing data of the intrusion detection type of sensing service, the second indication information may indicate that information to be included in the requested sensing data includes but is not limited to at least one of the following: information indicating whether intrusion occurs, information indicating a size of an intrusion target, information indicating a location of the intrusion target, information indicating a size of the intrusion target, and information indicating a speed of the intrusion target.

In this embodiment, after the AF network element further indicates the content to be included in the sensing data that is requested to be subscribed to, when sending the sensing data to the NEF network element, the first network element sends, to the AF network element, the content of the sensing data that the AF requests to subscribe to.

With reference to the first aspect, in a possible implementation, the AF network element further sends third information to the NEF network element, where the third information indicates at least one of the following: a transmission protocol supported by the AF network element, a media type supported by the AF network element, or a message format supported by the AF network element. Correspondingly, after receiving the second information, the NEF network element sends fourth information to the first network element, where the fourth information indicates at least one of the following: a transmission protocol supported by the AF network element, a media type supported by the AF network element, or a message format supported by the AF network element.

In this embodiment, the transmission protocol supported by the AF network element, the media type supported by the AF network element, or the message format supported by the AF network element is also referred to as a data transmission manner supported by the AF network element.

In other words, in this implementation, the NEF network element sends, to the first network element, the data transmission manner supported by the AF network element. In this way, the first network element may learn of the data transmission manner supported by the AF network element, so that when the NEF network element exposes the sensing data to the AF network element, the AF network element can transmit the sensing data requested by the AF network element in the supported data transmission manner.

With reference to the first aspect, in a possible implementation, before the NEF network element receives the sensing data sent by the first network element, the method further includes: The first network element sends fifth information to the NEF network element, where the fifth information indicates at least one of the following: a transmission protocol used when the first network element sends the sensing data, a media type used when the first network element sends the sensing data, or a message format used when the first network element sends the sensing data. Correspondingly, after receiving the fifth information, the NEF network element receives, based on the fifth information, the sensing data sent by the first network element.

In this implementation, when exposing the sensing data to the AF network element through the NEF network element, the first network element further indicates the data transmission manner used for transmitting the sensing data, so that the NEF network element and the AF network element use the same data transmission manner as the first network element to receive the sensing data.

With reference to the first aspect, in a possible implementation, the method further includes: The NEF network element sends sixth information to the first network element, where the sixth information indicates a transmission path of the sensing data, the transmission path is a first transmission path or a second transmission path, the first transmission path is that the sensing data is sent to the NEF network element through the first network element and then sent to the AF network element by the NEF network element, and the second transmission path is that the sensing data is sent to the AF network element by a network element that collects the sensing data; and the NEF network element receives the sensing data from the first network element includes: when the transmission path indicated by the sixth information is the first transmission path, receiving the sensing data from the first network element.

In this implementation, the NEF network element determines the transmission path of the sensing data, and then further sends the sixth information when sending the second information to the first network element, to indicate the transmission path to the first network element. Correspondingly, the first network element controls transmission of the sensing data based on the transmission path indicated by the NEF network element.

According to a second aspect, this application provides a communication method. The method is applied to a first network element, and includes: sending sensing data to a network exposure function NEF.

With reference to the second aspect, in a possible implementation, the method further includes: receiving second information from the NEF network element, where the second information indicates an application function AF network element to request to subscribe to the sensing data.

With reference to the second aspect, in a possible implementation, the second information includes first indication information, and the first indication information indicates a sensing service type of the sensing data that is requested to be subscribed to.

With reference to the second aspect, in a possible implementation, the second information includes second indication information, and the second indication information indicates content to be included in the sensing data that is requested to be subscribed to.

With reference to the second aspect, in a possible implementation, the method further includes: receiving fourth information from the NEF network element, where the fourth information indicates at least one of the following: a transmission protocol supported by the AF network element, a media type supported by the AF network element, or a message format supported by the AF network element.

With reference to the second aspect, in a possible implementation, the method further includes: sending fifth information to the NEF network element, where the fifth information indicates at least one of the following: a transmission protocol used when the first network element sends the sensing data, a media type used when the first network element sends the sensing data, or a message format used when the first network element sends the sensing data; and sending the sensing data to the network exposure function NEF network element includes: sending the sensing data to the NEF network element based on the fifth information.

With reference to the second aspect, in a possible implementation, the method further includes: determining a transmission path of the sensing data, where the transmission path is a first transmission path or a second transmission path, the first transmission path is that the sensing data is sent to the NEF network element through the first network element and then sent to the AF network element by the NEF network element, and the second transmission path is that the sensing data is sent to the AF network element by a network element that collects the sensing data; and sending the sensing data to the network exposure function NEF network element includes: when the transmission path is the first transmission path, sending the sensing data to the NEF network element.

With reference to the second aspect, in a possible implementation, determining the transmission path of the sensing data includes: receiving sixth information from the NEF network element, where the sixth information indicates the transmission path.

With reference to the second aspect, in a possible implementation, the method further includes: if it is determined that the transmission path of the sensing data is the second transmission path, sending the sensing data to the AF network element or sending seventh information to the second network element, where the seventh information indicates the second network element to send the sensing data to the AF network element, and the seventh information includes an identifier of the AF network element.

For example, the identifier of the AF network element is at least one of address information and port information of the AF network element.

With reference to the second aspect, in a possible implementation, the method further includes: sending eighth information to the second network element, where the eighth information indicates at least one of the following: a transmission protocol used when the second network element sends the sensing data, a media type used when the second network element sends the sensing data, or a message format used when the second network element sends the sensing data.

With reference to the second aspect, in a possible implementation, the method further includes: sending ninth information to the AF network element through the NEF network element, where the ninth information indicates an identifier of the second network element.

For example, the identifier of the second network element is at least one of address information and port information of the second network element.

According to a third aspect, this application provides a communication method. The method is applied to an application function AF network element, and includes: sending first information to a network exposure function NEF network element, where the first information indicates the AF network element to request to subscribe to sensing data; and receiving the sensing data sent by the NEF network element.

With reference to the third aspect, in a possible implementation, the first information includes first indication information, and the first indication information indicates a sensing service type of the sensing data that is requested to be subscribed to.

With reference to the third aspect, in a possible implementation, the first information includes second indication information, and the second indication information indicates content to be included in the sensing data that is requested to be subscribed to.

According to a fourth aspect, this application provides a communication apparatus. The communication apparatus includes a memory, configured to perform the method according to any one of the first aspect or the possible implementations of the first aspect.

With reference to the fourth aspect, in a possible implementation, the communication apparatus further includes a processor, the memory is configured to store program instructions, and the processor is configured to invoke the program instructions in the memory to perform the method according to any one of the first aspect or the possible implementations of the first aspect.

According to a fifth aspect, this application provides a communication apparatus. The communication apparatus includes a memory, configured to perform the method according to any one of the second aspect or the possible implementations of the second aspect.

With reference to the fifth aspect, in a possible implementation, the communication apparatus further includes a processor, the memory is configured to store program instructions, and the processor is configured to invoke the program instructions in the memory to perform the method according to any one of the second aspect or the possible implementations of the second aspect.

According to a sixth aspect, this application provides a communication apparatus. The communication apparatus includes a memory, configured to perform the method according to any one of the third aspect or the possible implementations of the third aspect.

With reference to the sixth aspect, in a possible implementation, the communication apparatus further includes a processor, the memory is configured to store program instructions, and the processor is configured to invoke the program instructions in the memory to perform the method according to any one of the third aspect or the possible implementations of the third aspect.

According to a seventh aspect, this application provides a communication system. The communication system includes the communication apparatus according to the second aspect, and/or the communication apparatus according to the third aspect, and/or the communication apparatus according to the fourth aspect.

According to an eighth aspect, this application provides a computer-readable medium. The computer-readable medium stores program code to be executed by a computer, and the program code includes instructions used to perform the method according to any one of the first aspect to the third aspect or the possible implementations of the first aspect to the third aspect.

According to a ninth aspect, this application provides a chip system. The chip system includes at least one processor and a communication interface, the communication interface and the at least one processor are interconnected through a line, and the at least one processor is configured to run a computer program or instructions, to perform the method according to any one of the first aspect to the third aspect or the possible implementations of the first aspect to the third aspect.

According to a tenth aspect, this application provides a computer program product. The computer program product includes computer program code; and when the computer program code is run on a computer, the computer is enabled to implement the method according to any one of the first aspect to the third aspect or the possible implementations of the first aspect to the third aspect.

For technical effect brought by any one of the implementations of the second aspect to the tenth aspect, refer to technical effect brought by any one of the first aspect and the possible implementations of the first aspect. Details are not described.

### BRIEF DESCRIPTION OF DRAWINGS

FIG. 1 is a diagram of an example of implementing wireless sensing;
FIG. 2 is a diagram of a communication system according to this application;
FIG. 3 is a diagram of another communication system according to this application;
FIG. 4 is a schematic flowchart of a communication method according to an embodiment of this application;
FIG. 5 is a diagram of an architecture of a communication system according to this application;
FIG. 6 is a diagram of an architecture of another communication system according to this application;
FIG. 7 is a schematic flowchart of a communication method according to an embodiment of this application;
FIG. 8 is a schematic flowchart of a communication method according to an embodiment of this application;
FIG. 9 is a schematic flowchart of a communication method according to an embodiment of this application;
FIG. 10 is a schematic flowchart of a communication method according to an embodiment of this application;
FIG. 11A and FIG. 11B are a schematic flowchart of a communication method according to an embodiment of this application;
FIG. 12 is a diagram of a structure of a communication system according to an embodiment of this application; and
FIG. 13 is a diagram of a structure of a communication system according to another embodiment of this application.

### DESCRIPTION OF EMBODIMENTS

Existing wireless signals (for example, sound, light, and radio frequency signals) in an environment may be "additionally" used to sense the environment while completing their primary tasks (for example, illumination and communication). A radio frequency signal is used as an example. A radio wave generated by a signal transmitter may have physical phenomena such as direct radiation, reflection, and scattering in a propagation process. In this way, a signal formed at a signal receiver carries information reflecting a signal propagation space. For example, if a wireless connection signal received by a mobile phone is weak, a possible cause is that the mobile phone is far away from a wireless router. If strength of a Wi-Fi signal received by a mobile phone decreases sharply, a possible cause is that the mobile phone enters a specific closed space, for example, an elevator.

Therefore, scenario sensing may be implemented by analyzing a change of a wireless signal in the propagation process. Usually, this technology is also referred to as a wireless sensing technology or a non-sensor scenario sensing technology.

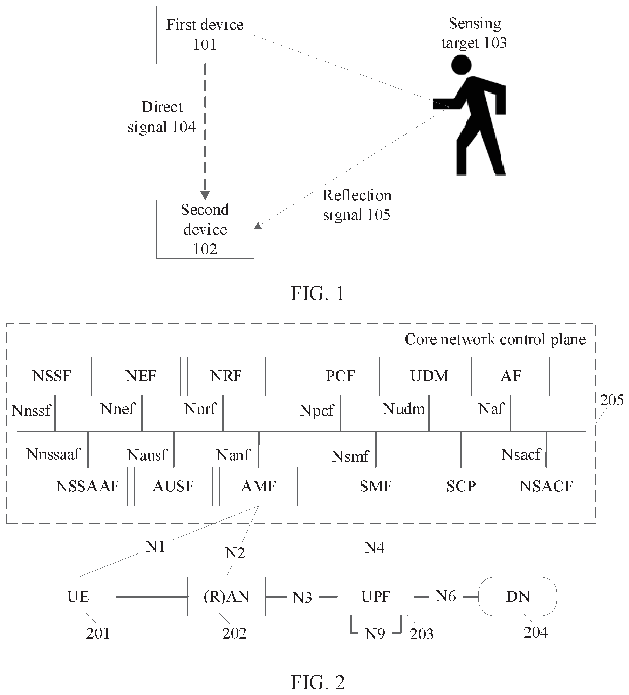

For ease of understanding, FIG. 1 is a diagram of an example of implementing wireless sensing. As shown in FIG. 1, a wireless sensing system includes a first device 101 and a second device 102, and a signal received by the second device 102 is a signal obtained by superposing a direct signal 104 and a reflection signal 105 reflected by a sensing target 103. When the sensing target 103 moves, the reflection signal 105 changes. In this way, the signal received by the second device 102 also changes accordingly. Therefore, a status of the sensing target 103 may be learned of by using the change of the signal received by the second device 102.

In some embodiments, the wireless sensing technology may be radar-based sensing. A radar includes a transmit antenna and a receive antenna. The transmit antenna sends an electromagnetic wave. The electromagnetic wave is reflected when reaching a target, and a reflected wave may be received by the receive antenna. A radar system analyzes feature information of the target, for example, a location, a shape, a motion feature, and a motion path, through signal processing based on a change of a received wave. Radar sensing has many unique advantages: (1) The radar is not affected by lighting conditions, and has a capability of penetrating an obstacle, so that personal privacy can be better protected. (2) The radar has a longer sensing range, and poses no harm to people or animals. (3) For detection of motion, a Doppler effect of a target echo is used to observe and interpret a motion status of the target, for example, a motion direction and a motion speed. When a multi-channel radar sensor is used, the motion of the target can also be observed from different viewing angles. By collecting the motion status of the target from different viewing angles and analyzing instantaneous information and historical information, complex motion can be distinguished.

Currently, the radio sensing technology may be applied to different scenarios. For example, in a sports scenario, this technology may be used to detect a motion status and a motion route of a person and a ball. In a home environment scenario, this technology may be used for human body fall detection to prevent an elderly person from falling; and interpret a human body motion status and a route by processing channel state information (channel state information, CSI). In a vehicle assisted driving field, this technology may be used to detect a pedestrian and a front vehicle to implement anti-collision warning. In a specific industrial park scenario, this technology may be used to monitor intrusion of a flying object such as an uncrewed aerial vehicle. In a traffic scenario, this technology may be used to implement functions such as traffic flow statistics and vehicle navigation.

With development of 5G networks, requirements for communication systems having sensing capabilities are emerging gradually. For example, in some scenarios of smart cities and smart transportation, requirements for obtaining sensing data such as relative locations between objects and speeds and shapes of objects emerge gradually. The sensing data is data indicating a sensing result.

It should be noted herein that an architecture of a communication system that needs to have a sensing capability is not specifically limited in embodiments of this application.

For example, the architecture may be a system architecture (which is also referred to as a network architecture) based on a service-based architecture shown in FIG. 2. As shown in FIG. 2, the network architecture includes user equipment (user equipment, UE) 201, an access network (access network, AN) or a radio access network (radio access network, RAN) 202, a user plane function (user equipment, UPF) 203 of a core network (core network, CN) data plane, a data network (data network, DN) 204, and a core network control plane 205.

The UE 201 may be a device that provides voice and/or data connectivity for a user, for example, a handheld device or a vehicle-mounted device having a wireless connection function. The UE may also be referred to as a terminal device, an access terminal (access terminal), a user unit (user unit), a user station (user station), a mobile station (mobile station), a mobile (mobile) console, a remote station (remote station), a remote terminal (remote terminal), a mobile device (mobile equipment), a user terminal (user terminal), a wireless communication device (wireless telecom equipment), a user agent (user agent), user equipment (user equipment), or a user apparatus. The UE may be a station (station, STA) in a wireless local area network (wireless local Area network, WLAN), or may be a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a compute device or another processing device connected to a wireless modem, a vehicle-mounted device, a wearable device, a terminal in a next-generation communication system (for example, a 5th generation (5th generation, 5G) communication network), a terminal device in a future evolved public land mobile network (public land mobile network, PLMN), or the like. 5G may also be referred to as new radio (new radio, NR). In a possible application scenario of this application, the terminal device may alternatively be a terminal device that often operates on land, for example, a vehicle-mounted device. In this application, for ease of description, a chip deployed in the foregoing device, or a chip may also be referred to as a terminal device.

A main function of the (R)AN 202 is to control the UE 201 to wirelessly access a mobile communication network. The AN 202 is a part of the mobile communication system, and implements a radio access technology. For example, the AN 202 may be, for example, any device having a wireless transceiver function. The device includes but is not limited to: a base station (base station), an evolved NodeB (evolved NodeB, eNB or eNodeB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), and an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system; or may be a gNB or a transmission point (TRP or TP) in a 5G system, for example, an NR system, and one or one group of antenna panels (including a plurality of antenna panels) in a base station in a 5G system; or may be a network node that forms a gNB or a transmission point, for example, a baseband unit (BBU) or a distributed unit (distributed unit, DU); or may be a next-generation base station in a 6th generation (6th generation, 6G) mobile communication system, a base station in a future mobile communication system, an access node in a Wi-Fi system, or the like; or may be a module or unit that completes some functions of a base station, for example, may be a central unit (central unit, CU), or may be a distributed unit (distributed unit, DU).

In some deployments, a gNB may include a central unit (central unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the physical layer, or is converted from information at the physical layer. Therefore, in this architecture, higher layer signaling, for example, RRC layer signaling, may also be considered as being sent by the DU or by the DU and the CU. It may be understood that the network device may be a CU node, a DU node, or a device including a CU node and a DU node. In addition, the CU may be classified into a network device in an access network (radio access network, RAN), or the CU may be classified into a network device in a core network (core network, CN). This is not limited in this application.

The UE 201 and the (R)AN 202 may be deployed on the land, including an indoor device, an outdoor device, a handheld device, or a vehicle-mounted device; may be deployed on the water surface; or may be deployed on a plane, a balloon, and an artificial satellite in the air. An application scenario of the AN 202 and the UE 201 are not limited in embodiments of this application.

The UE 201 and the (R)AN 202 may communicate with each other by using a licensed spectrum, may communicate with each other by using an unlicensed spectrum, or may communicate with each other by using both a licensed spectrum and an unlicensed spectrum; or may communicate with each other by using a spectrum below 6 gigahertz (gigahertz, GHz), may communicate with each other by using a spectrum above 6 GHz, or may communicate with each other by using a spectrum below 6 GHz and a spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem that includes a base station function herein may be a control center in an application scenario of the foregoing terminal, for example, a smart grid, industrial control, smart transportation, and a smart city. A function of the terminal may alternatively be performed by a module (for example, a chip or a modem) in the terminal, or may be performed by an apparatus including the function of the terminal.

The UPF 203 is a functional unit of a user plane, and is mainly responsible for packet data packet forwarding, quality of service (quality of service, QoS) control, charging information statistics, a connection to an external network, and the like. The UPF 203 includes related functions of a serving gateway (serving gateway, SGW) and a public data network gateway (public data network gateway, PDN-GW) of a long term evolution (long term evolution, LTE) technology.

The DN 204 is a network responsible for providing a service for the UE 201. For example, some DNs provide an internet access function for the UE 201, and some other DNs provide an SMS message function for the UE 201.

The core network control plane 206 is mainly responsible for service procedure interaction, delivering a data packet forwarding policy and a QoS control policy, and the like to a user plane, and the like. For example, as shown in FIG. 2, a control plane network element in the core network control plane 206 mainly includes a mobility management function (access and mobility management function, AMF), a session management function (session management function, SMF), a policy control function (policy control function, PCF), an application function (application function, AF), a network exposure function (network exposure function, NEF), an authentication server function (authentication server function, AUSF), a unified data management (unified data management, UDM), a network repository function (network repository function, NRF), a unified data repository (unified data repository, UDR), and the like. The AMF is mainly responsible for access and mobility management of the UE 201, for example, including mobility status management, allocation of a temporary user identity, and user authentication and authorization. The SMF is mainly responsible for session management functions, for example, management of creation, deletion, and the like of a user protocol data unit (protocol data unit, PDU) session, maintenance of a PDU session context and user plane forwarding pipeline information, UP network element selection, UP network element reselection, IP address allocation, bearer establishment, modification, and release, and QoS control. The UDM is responsible for managing subscription data, and notifying a corresponding network element when the subscription data is modified. The UDR is responsible for storing and retrieving subscription data, policy data, common architecture data, and the like, and is used by the UDM, the PCF, and the NEF to obtain related data. The UDR needs to provide different data access authentication mechanisms for different types of data, such as subscription data and policy data, to ensure data access security. For an invalid service-oriented operation or a data access request, the UDR needs to return a failure response with a proper cause value. The AF is configured to provide a specific application-layer service for UE. When providing the service for the UE, the AF has requirements for a quality of service QoS (Policy) and a charging (Charging) policy, and needs to notify a network. In addition, the AF also needs application-related information fed back by a core network. The NSSF is configured to be responsible for network slice selection. The NRF is configured to be responsible for a registration and discovery function of a network element, and maintain information about the network element, for example, an instance identifier, a type, a PLMN, a slice-related identifier, an IP address or an FQDN, a capability of the network element, and a supported service of the network element.

The PCF is mainly responsible for executing policy control, and is similar to a policy and charging rules function (policy and charging rules function, PCRF) network element in the long term evolution (long term evolution, LTE) technology, including generating and managing a user, a session, a quality of service (quality of service, QoS) flow processing policy, and quality of service, generating a charging rule, and delivering a corresponding rule to the UPF network element through the SMF. The AF is mainly responsible for providing functions of various business services, can interact with a core network through the NEF network element, and can interact with a policy management framework to perform policy management. The NEF is configured to: provide a framework, authentication, and an interface that are related to network capability exposure, and information between a network function of a 5G system and another network function. For detailed descriptions of each network element, refer to descriptions in a related technology. Details are not described herein again.

In the network architecture shown in FIG. 2, the UE 201 and the AMF communicate with each other through an N1 interface. The N1 interface is configured to transmit non-access stratum (non-access stratum, NAS) signaling. The AN 202 and the AMF communicate with each other through an N2 interface. The AN 202 and the UPF 203 communicated with each other through an N3 interface. The N3 interface is configured to perform tunnel transmission of user data by using a GPRS tunneling protocol for the user plane (GPRS tunneling protocol for the user plane, GTP-U). The UPF 203 and the SMF communicate with each other through an N4 interface. The N4 interface is configured to perform policy configuration and the like on the UPF 203. The UPF 203 and the external DN 204 communicate with each other through an N6 interface. In a specific scenario, the N6 interface needs to support a dedicated line or an L2/L3 tunnel, and may communicate with a DN network based on an internet protocol (internet protocol, IP).

It should be noted herein that each network element in embodiments of this application may be the network element mentioned in the foregoing embodiment, or may be a network element that has a same function as the foregoing network element in a future communication system. For example, the user plane function network element may be the UPF network element, or may be a network element that has a same function as the UPF network element in the future communication system. The application function network element may be the AF network element, or may be a network element that has a same function as the AF network element. The policy management network element may be the PCF network element, or may be a network element that has a same function as the PCF network element.

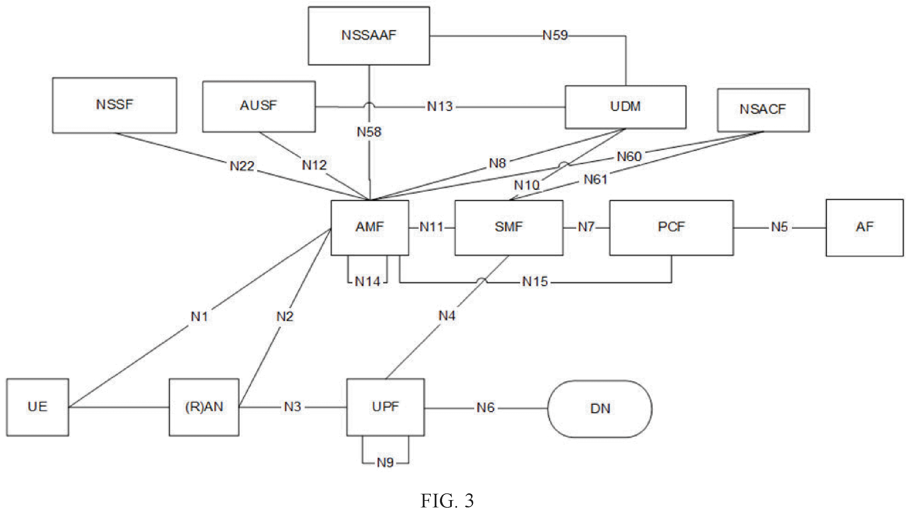

For example, the network architecture may also be a point-to-point interface-based network architecture shown in FIG. 3. A main difference between this architecture and the architecture shown in FIG. 2 is that an interface between network elements is a point-to-point interface instead of a service-oriented interface. For functions of the network elements, refer to descriptions of the network elements in FIG. 2. Details are not described herein again. In addition, for concepts of the point-to-point interface and the service-oriented interface and more detailed descriptions, refer to descriptions in the related technology. Details are not described herein again.

It should be noted again that FIG. 2 and FIG. 3 are merely examples, and do not constitute a limitation on the architecture of the communication system in this application.

In an implementation, an integrated radar communication base station may be deployed to enable the communication system to have the sensing capability. Further, accurate communication may be implemented based on an accurate sensing capability of the radar, thereby improving communication efficiency.

In some embodiments, the communication system may perform time division multiplexing or space division multiplexing on a resource used for communication and a resource used for sensing, to implement sensing of a surrounding environment or an object.

It should be understood that for the communication system having the sensing capability, there may be a requirement that an application requests the communication system to feed back sensing data. For this requirement, the communication system needs to have a capability of feeding back the sensing data to the application. In embodiments of this application, the sensing data is specifically data of a sensing result obtained when the communication system implements sensing based on the wireless sensing technology. Therefore, the sensing data in embodiments of this application may also be referred to as a sensing result. The following is described based on the sensing data.

However, currently, no solution of how to feed back the sensing data is provided. In view of this, this application provides a communication method, to provide sensing data for an application that requires the sensing data, or to expose sensing data to an application that requires the sensing data.

The following describes the communication method provided in this application with reference to the accompanying drawings.

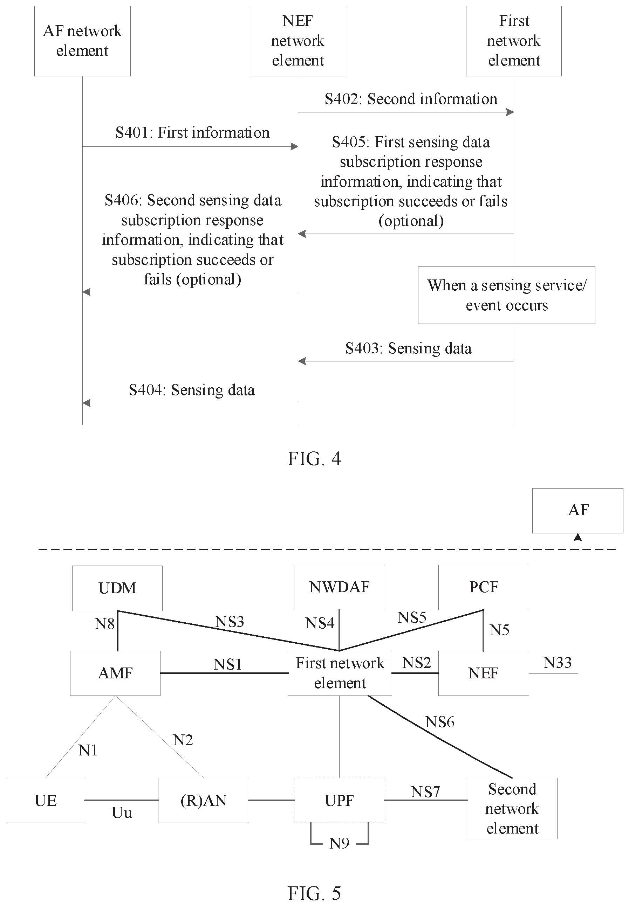

FIG. 4 is a schematic flowchart of a communication method according to an embodiment of this application. As shown in FIG. 4, the method includes the following steps.

S401: An AF network element sends first information to an NEF network element, and the NEF network element receives the first information, where the first information indicates the AF network element to request to subscribe to sensing data.

In this embodiment, the AF network element requests to subscribe to the sensing data by sending the first information to the NEF network element.

In an implementation, the first information includes first indication information, and the first indication information indicates a sensing service type of the sensing data that the AF network element requests to subscribe to.

It should be noted herein that a type of sensing is not limited in this embodiment. For example, the type of sensing includes but is not limited to at least one of the following: an intrusion detection type of sensing, a traffic detection type of sensing, a path tracking type of sensing, a collision detection type of sensing, a positioning type of sensing, and a speed measurement type of sensing. In this embodiment, different types of sensing are also referred to as different types of sensing services. For example, the intrusion detection type of sensing is also referred to as an intrusion detection type of sensing service, the traffic detection type of sensing is also referred to as a traffic detection type of sensing service, and the collision detection type of sensing is also referred to as a collision detection type of sensing service.

It should be understood that different types of sensing services may also be understood as different sensing events. For example, a sensing service for sensing a vehicle density may also be referred to as a sensing event for sensing a vehicle density, and a sensing service for sensing a traffic participant may also be referred to as a sensing event for sensing a traffic participant. Therefore, in this embodiment of this application, different types of sensing services may also be described as different sensing events. Optionally, that the first indication information indicates the sensing service type of the requested sensing data may also be described as follows: The first indication information indicates a sensing event type of the requested sensing data.

For example, during implementation, the first information may include an identifier (identification, ID) of the sensing service type/the sensing event type, to indicate the sensing data, of the sensing service type/the sensing event type, that is desired to be requested.

Further, when the first information includes the first indication information indicating the sensing service type of the requested sensing data, the first information may further include second indication information, and the second indication information indicates content to be included in the sensing data that is requested to be subscribed to, in other words, the second indication information indicates information or a parameter to be included in the subscribed sensing data.

For example, when the AF network element requests sensing data of the intrusion detection type of sensing service, the second indication information may indicate that information to be included in the requested sensing data includes but is not limited to at least one of the following: information indicating whether intrusion occurs, information indicating a size of an intrusion target, information indicating a location of the intrusion target, information indicating a track of the intrusion target, and information indicating a speed of the intrusion target.

For example, when the AF network element requests sensing data of the traffic detection type of sensing service, the second indication information may indicate that information to be included in the requested sensing data includes but is not limited to at least one of the following: information indicating a traffic volume, information indicating an ID of a sensing target (for example, a vehicle), information indicating a feature of the sensing target (for example, information such as a color of the sensing target), and information indicating whether to track.

For example, when the AF network element requests sensing data of the path tracking type of sensing service, the second indication information may indicate that information to be included in the requested sensing data includes but is not limited to at least one of the following: information indicating a feature of a tracked sensing target (for example, information indicating a shape, a size, an initial location, and the like of the sensing target), information indicating whether a visual path is required, and information indicating whether a path graph needs to be drawn.

For example, when the AF network element requests sensing data of the collision detection type of sensing service, the second indication information may indicate that information to be included in the requested sensing data includes but is not limited to at least one of the following: information indicating a feature of a sensing target, information indicating an initial location of the sensing target, information indicating whether to track, information indicating a collision warning distance, and information indicating requirements from vehicle speed planning to recommendation.

For example, when the AF network element requests sensing data of the positioning type of sensing service, the second indication information may indicate that information to be included in the requested sensing data includes but is not limited to at least one of the following: information indicating a feature of a sensing target (for example, shape information, size information, and initial location information of the sensing target).

For example, when the AF network element requests sensing data of the speed measurement type of sensing service, the second indication information may indicate that information to be included in the requested sensing data includes but is not limited to at least one of the following: information indicating a feature of a sensing target (for example, shape information, size information, and initial location information of the sensing target).

In some embodiments, the first information sent by the AF network element further includes an identifier of the AF network element, for example, address information and port information of the AF network element.

S402: The NEF network element sends second information to a first network element, and the first network element receives the second information, where the second information indicates the AF network element to request to subscribe to the sensing data.

In this embodiment, after receiving the first information that is sent by the AF network element and that is used to request to subscribe to the sensing data, the NEF network element sends, to the first network element, the second information indicating the AF network element to request to subscribe to the sensing data.

Alternatively, in other words, in this embodiment, information that is sent by the AF network element to the NEF network element and that indicates the AF to request to subscribe to the sensing data is referred to as the first information, and information that is sent by the NEF network element to the first network element after receiving the first information and that indicates the AF network element to request to subscribe to the sensing data is referred to as the second information.

In an implementation, the first information is the same as the second information. In another implementation, the first information is different from the second information.

In some embodiments, the NEF network element may send the first information to the first network element through a UDM network element. To be specific, the NEF first sends the first information to the UDM network element, and then the UDM network element sends the first information to the first network element.

In some embodiments, the second information includes at least one of address information or port information of the AF network element, to notify the first network element of the AF network element that requests to subscribe to the sensing data.

S403: The first network element sends, to the NEF network element, the sensing data subscribed to by the AF network element, and the NEF network element receives the sensing data.

In this embodiment of this application, the first network element is a network element that can send the sensing data to the NEF network element.

In some embodiments, the first network element may collect the sensing data. For example, the first network element may collect the sensing data from a sensing device, and the sensing device may be, for example, a sensing base station. Optionally, the first network element may process the sensing data.

In some embodiments, the first network element may be a network element that can control the second network element and obtain the sensing data from the second network element. In this embodiment, the second network element is a network element that can collect the sensing data. For example, the second network element may collect the sensing data from a base station having a sensing function.

In this embodiment, after receiving the information that is sent by the NEF network element and that indicates the AF to request to subscribe to the sensing data, the first network element obtains the sensing data required by the AF network element, and then sends the sensing data to the NEF network element.

For example, if the first network element may collect the sensing data, the first network element collects, from the sensing device, the sensing data that the AF network element requests to subscribe to, and sends the sensing data to the NEF network element. For another example, if the first network element is a network element that controls the second network element and obtains the sensing data from the second network element, the first network element obtains, from the second network element, the sensing data that the AF network element requests to subscribe to, and sends the sensing data to the NEF network element. An SF network element collects, from the sensing device, the sensing data that the AF network element requests to subscribe to.

For example, when the AF network element requests the sensing data of the intrusion detection type of sensing service, the second indication information may indicate that the information to be included in the requested sensing data includes: the information indicating whether the intrusion occurs, the information indicating the size of the intrusion target, the information indicating the location of the intrusion target, the information indicating the track of the intrusion target, and the information indicating the speed of the intrusion target. In this case, after the intrusion detection type of sensing service occurs, the first network element obtains sensing data 111, sensing data 112, sensing data 113, sensing data 114, and sensing data 115 from the second network element. The sensing data 111 indicates whether the intrusion occurs, the sensing data 112 indicates the size of the intrusion target, the sensing data 113 indicates the location of the intrusion target, the sensing data 114 indicates the track of the intrusion target, and the sensing data 115 indicates the speed of the intrusion target. Then, the first network element sends the sensing data 111, the sensing data 112, the sensing data 113, the sensing data 114, and the sensing data 115 to the NEF network element.

Another example of subscribing to the intrusion detection type of sensing service is used. For example, the AF network element wants to subscribe to sensing data of an intrusion type of sensing service when sensing is performed on a first area. Specifically, content of the subscribed sensing data of the sensing service is whether target intrusion occurs in a period of time. When an intrusion detection type of event occurs in the first area, if the first network element determines that the target intrusion occurs, the first network element sends the sensing data to the NEF, and the sensing data indicates that the target intrusion occurs.

For example, when the AF network element requests the sensing data of the traffic detection type of sensing service, the second indication information indicates that the information to be included in the requested sensing data includes: the information indicating the traffic volume, the information indicating the ID of the sensing target (for example, the vehicle), the information indicating the feature of the sensing target (for example, the information such as the color of the sensing target), and the information indicating whether to track. In this case, after the traffic detection type of sensing service occurs, the first network element obtains sensing data 211, sensing data 212, sensing data 213, and sensing data 214 from the second network element. The sensing data 211 indicates the traffic volume, the sensing data 212 indicates the ID of the sensing target (for example, the vehicle), the sensing data 213 indicates the feature of the sensing target, and the sensing data 214 indicates whether to track. Then, the first network element sends the sensing data 211, the sensing data 212, the sensing data 213, and the sensing data 214 to the NEF network element.

For example, when the AF network element requests the sensing data of the path tracking type of sensing service, the second indication information indicates that the information to be included in the requested sensing data includes: the information indicating the feature of the tracked sensing target (for example, the information indicating the shape, the size, the initial location, and the like of the sensing target), the information indicating whether the visual path is required, and the information indicating whether the path graph needs to be drawn. In this case, after the path tracking type of sensing service occurs, the first network element obtains sensing data 311, sensing data 312, and sensing data 313 from the second network element. The sensing data 311 indicates the feature of the tracked sensing target, the sensing data 312 indicates whether the visual path is required, and the sensing data 313 indicates whether the path graph needs to be drawn. Then, the first network element sends the sensing data 311, the sensing data 312, and the sensing data 313 to the NEF network element.

For example, when the AF network element requests the collision detection type of sensing service, the second indication information indicates that the information to be included in the requested sensing data includes: the information indicating the feature of the sensing target, the information indicating the initial location of the sensing target, the information indicating whether to track, the information indicating the collision warning distance, and the information indicating the requirements from vehicle speed planning to recommendation. In this case, after the collision detection type of sensing service occurs, the first network element obtains sensing data 411, sensing data 412, sensing data 413, sensing data 414, and sensing data 415 from the second network element. The sensing data 411 indicates the feature of the sensing target, the sensing data 412 indicates the initial location of the sensing target, the sensing data 413 indicates whether to track, the sensing data 414 indicates the collision warning distance, and the sensing data 415 indicates the requirements from vehicle speed planning to recommendation. Then, the first network element sends the sensing data 411, the sensing data 412, the sensing data 413, the sensing data 414, and the sensing data 415 to the NEF network element.

For example, when the AF network element requests the positioning type of sensing service, the second indication information indicates that the information to be included in the requested sensing data may include but is not limited to: the information indicating the feature of the sensing target (for example, the shape information, the size information, and the initial location information of the sensing target). In this case, after the positioning type of sensing service occurs, the first network element obtains sensing data 511 from the second network element. The sensing data 511 indicates the feature of the sensing target. Then, the first network element sends the sensing data 511 to the NEF network element.

Optionally, in some embodiments, when sending the sensing data, the first network element may further indicate the sensing service type of the sensing data to the first network element.

S404: The NEF network element sends, to the AF network element, the sensing data sent by the first network element, and the AF network element receives the sensing data sent by the NEF network element.

Optionally, in this embodiment, the first network element may further determine whether the subscription succeeds, and then perform S403 only when the subscription succeeds. As shown in FIG. 4, the method further includes S405 and S406. S405: The first network element sends first sensing data subscription response information to the NEF network element, where the first sensing data subscription response information indicates, to the NEF network element, that subscription of the AF network element succeeds or fails; and the NEF network element receives the first sensing data subscription response information. S406: The NEF network element sends second sensing data subscription response information to the AF network element, to indicate, to the AF network element, whether subscription succeeds.

It may be seen that in the communication method provided in this embodiment, after the AF network element requests to subscribe to the sensing data, the first network element obtains the sensing data requested by the AF network element and transmits the sensing data to the NEF network element. For example, the first network element collects the sensing data from the sensing device, or the first network element obtains the sensing data from the second network element that collects the sensing data, and then the NEF network element feeds back the sensing data to the AF network element. That is, in this embodiment, the first network element exposes the sensing data to the NEF network element, and then the NEF network element exposes the sensing data to the AF network element. Alternatively, in other words, in this embodiment, the first network element may expose the sensing data to the AF network element through the NEF network element. Alternatively, in other words, in this embodiment, a transmission manner in which the sensing data is fed back to the AF network element is: first network element-NEF network element-AF network element.

It should be understood that for an end to send the sensing data and an end to receive the sensing data, a same transmission protocol, a same media type, a same message format, and the like need to be used, or an unparsable problem exists.

For example, if a transmission protocol used by the end to send the sensing data is an A protocol and a message format is a B format, and a transmission protocol used by the end to receive the sensing data is a C protocol and a message format is a B format or another format, after the end to send the sensing data sends the sensing data, the end to receive the sensing data may be incapable of parsing information sent by the end that sends the sensing data.

Therefore, in some embodiments, in S401, when sending the first information to request to subscribe to the sensing data, the AF network element in this application may further send third information to the NEF network element, where the third information indicates at least one of the following: a transmission protocol supported by the AF network element, a media type supported by the AF network element, or a message format supported by the AF network element.

Optionally, the NEF network element may send, to the first network element, a same message carrying both the first information and the third information. For example, in this embodiment of this application, the same message is referred to as a sensing data subscription message.

In this application, the transmission protocol supported by the AF network element, the media type supported by the AF network element, or the message format supported by the AF network element may be considered as the data transmission manner used when the sensing data is transmitted. Alternatively, in other words, the third information may be considered as indicating the data transmission manner supported by the AF network element.

Correspondingly, after receiving the third information, the NEF network element sends fourth information to the first network element, where the fourth information indicates, to the first network element, the data transmission manner supported by the AF network element. To be specific, the fourth information indicates at least one of the following: a transmission protocol supported by the AF network element, a media type supported by the AF network element, or a message format supported by the AF network element.

Alternatively, in other words, in this embodiment, information that is sent by the AF network element to the NEF network element and that indicates the data transmission manner supported by the AF is referred to as the third information, and information that is sent by the NEF network element to the first network element after receiving the third information and that indicates the data transmission manner supported by the AF is referred to as the fourth information.

In an implementation, the third information is the same as the fourth information. In another implementation, the third information is different from the fourth information.

Further, when the first network element receives the fourth information, the first network element determines, based on the fourth information, at least one of the following: a transmission protocol used when the first network element sends the sensing data, a media type used when the first network element sends the sensing data, or a message format used when the first network element sends the sensing data; and then sends the sensing data based on the determined transmission protocol, media type, or message format.

In some embodiments, after determining, based on the fourth information, one or more of the transmission protocol, the media type, and the message format used when the first network element sends the sensing data, the first network element may further send fifth information to the NEF network element, where the fifth information indicates at least one of the following: a transmission protocol used when the first network element sends the sensing data, a media type used when the first network element sends the sensing data, or a message format used when the first network element sends the sensing data. Correspondingly, the NEF network element receives the sensing data from the first network element based on the fifth information, that is, the NEF network element receives the sensing data based on the data transmission manner indicated by the first network element.

In some embodiments, after determining, based on the second information, the data transmission manner used when the first network element sends the sensing data, the first network element may not send the fifth information. For example, when the first network element uses a system-default data transmission manner, the first network element may not send the fifth information.

In an optional embodiment, in this embodiment of this application, after receiving the first information, the NEF network element may further first determine a transmission path of the sensing data based on the sensing data that the AF network element requests to subscribe to.

In this embodiment, the transmission path of the sensing data includes a first transmission path or a second transmission path, the first transmission path is that the sensing data is sent to the NEF network element through the first network element and then sent to the AF network element by the NEF network element, and the second transmission path is that the sensing data is sent to the AF network element by a network element that collects the sensing data. Optionally, the transmission path may also be referred to as a notification manner, and descriptions of the transmission path do not constitute a limitation on this application.

Further, when the NEF network element determines the transmission path, the NEF network element may further send sixth information to the first network element, where the sixth information indicates the transmission path of the sensing data. Correspondingly, the first network element transmits the sensing data based on the transmission path indicated by the sixth information. The following describes two embodiments in which the first network element transmits the sensing data based on the transmission path indicated by the sixth information.

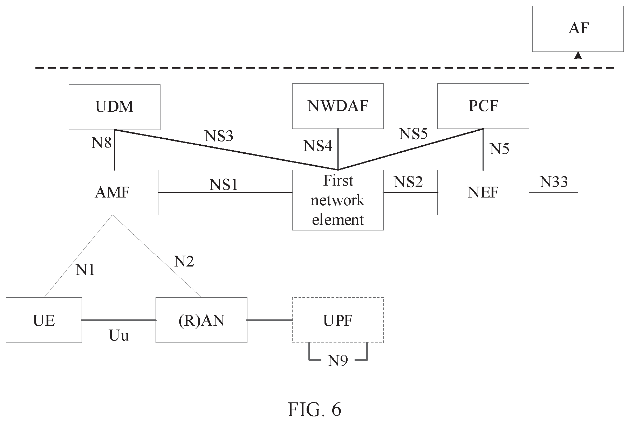

With reference to the accompanying drawings, the following describes two embodiments of a transmission method of sensing data when an NEF network element determines a transmission path. Before the two embodiments are described, two system architectures provided in this application are first described with reference to FIG. 5 and FIG. 6.

FIG. 5 is a diagram of network elements included in a communication system having a sensing capability according to this application. As shown in FIG. 5, the system architecture includes network elements: UE, a (R)AN, a UPF, an AMF, a UDM, an NWDAF, a PCF, a first network element, a second network element, an NEF, and an AF. The first network element communicates with the AMF through an NS1 interface, the first network element communicates with the NEF through an NS2 interface, the first network element communicates with the UDM through an NS3 interface, the first network element communicates with the NWDAF through an NS4 interface, the first network element communicates with the PCF through an NS5 interface, the first network element communicates with the second network element through an NS6 interface, and the second network element communicates with the UPF through an NS7 interface. It should be noted that the foregoing interface name is merely an example, and a specific interface name is not limited in this application. Specifically, the first network element may provide a control plane function related to a sensing capability. For example, the first network element determines a second network element that includes requested sensing data of a sensing service. Specifically, the second network element is responsible for collecting the sensing data. For example, the sensing data is obtained from a sensing base station. For detailed descriptions of another network element, refer to descriptions in a related technology. Details are not described herein again.

FIG. 6 is a diagram of network elements included in a communication system having a sensing capability according to this application. As shown in FIG. 6, in the system architecture, a first network element may collect sensing data from a sensing device. For example, the sensing data is obtained from a sensing base station. For detailed descriptions of another network element, refer to descriptions in a related technology. Details are not described herein again.

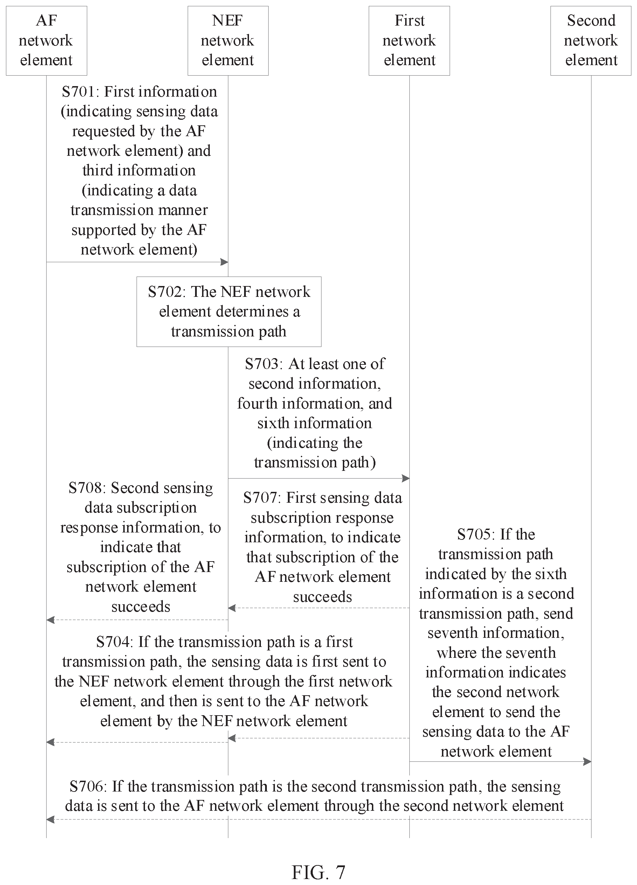

With reference to FIG. 7, the following describes a communication method for transmitting sensing data based on a transmission path determined by an NEF network element in the architecture shown in FIG. 5. As shown in FIG. 7, the method includes the following steps.

S701: An AF network element sends first information and third information to an NEF network element, where the first information is used to request to subscribe to sensing data, and the third information indicates a data transmission manner supported by the AF network element.

Optionally, in some embodiments, when there is a default data transmission manner, the third information in this embodiment is optional.

The data transmission manner includes, for example, a transmission protocol supported by the AF network element, a media type supported by the AF network element, or a message format supported by the AF network element.

For descriptions of the first information, refer to the foregoing descriptions in S401. Details are not described herein again.

For the third information, refer to the foregoing descriptions about the third information. Details are not described herein again.

S702: The NEF network element determines a transmission path, where the transmission path includes a first transmission path or a second transmission path.

Specifically, the first transmission path is that the sensing data is sent to the NEF network element through a first network element and then sent to the AF network element by the NEF network element, and the second transmission path is that the sensing data is sent to the AF network element by a network element that collects the sensing data.

In this embodiment, the network element that collects the sensing data is a second network element.

Alternatively, in other words, in this embodiment of this application, the transmission path determined by the NEF network element is either the first transmission path or the second transmission path. Alternatively, in other words, the transmission path determined by the NEF network element is one of the first transmission path and the second transmission path.

It should be noted herein that a manner of determining the transmission path by the NEF network element is not limited in this embodiment.

In an implementation, determining may be performed based on a delay requirement of the requested sensing data. For example, if the sensing data subscribed to by the AF network element has a high delay requirement, it may be determined that the transmission path is the second transmission path.

In an implementation, determining may be performed based on a volume of requested sensing data. For example, if the sensing data subscribed to by the AF network element is of a large data volume, it may be determined that the transmission path is the second transmission path.

In an implementation, determining may be performed based on at least one of a sensing service type and a sensing event type of the requested sensing data. For example, a correspondence between each sensing service type/sensing event type and a transmission path may be preset in advance, and then the NEF network element determines, based on the correspondence, the transmission path that needs to be used for the requested sensing data.

S703: The NEF network element sends at least one of second information, fourth information, and sixth information to the first network element, and the NEF network element receives at least one of the second information, the third information, and the sixth information, where the sixth information indicates the transmission path determined by the NEF network element.

Optionally, in some embodiments, the first transmission path may alternatively be preset as a default transmission path of the sensing data. Correspondingly, if the NEF network element determines, in S702, that the transmission path of the sensing data is the first transmission path, the NEF network element may alternatively not send the sixth information to the first network element. In this case, for the first network element, the transmission path of the sensing data is determined as the first transmission path. That is, the sixth information in this embodiment is optional.

Optionally, in some embodiments, the second transmission path may alternatively be preset as a default transmission path of the sensing data. Correspondingly, if the NEF network element determines, in S702, that the transmission path of the sensing data is the second transmission path, the NEF network element may alternatively not send the sixth information to the first network element. In this case, for the first network element, the transmission path of the sensing data is determined as the second transmission path. That is, the sixth information in this embodiment is optional.

In this embodiment of this application, if the transmission path determined by the NEF network element is the first transmission path, the manner of transmitting the sensing data includes S704 and S705. Alternatively, in other words, when the transmission path determined by the NEF network element is the first transmission path, the steps in this embodiment include S701 to S704.

S704: The first network element obtains the sensing data from the second network element and sends the sensing data to the NEF network element, and then the NEF network element sends the sensing data to the AF network element.

The second network element obtains, from a sensing device, the sensing data that the AF requests to subscribe to, and then sends the sensing data to the first network element, so that the first network element learns of the sensing data that the AF network element requests to subscribe to. Further, the first network element sends, to the NEF network element, the sensing data sent by the second network element, and the NEF network element sends the sensing data to the AF network element.

For example, in an implementation, the first network element sends, to the second network element, information used to request the AF network element to subscribe to the sensing data. Correspondingly, after receiving the information, the second network element sends, to the first network element, the sensing data subscribed to by the AF network element.

In this embodiment of this application, if the transmission path determined by the NEF network element is the second transmission path, the manner of transmitting the sensing data includes S705 and S706. Alternatively, in other words, when the transmission path determined by the NEF network element is the second transmission path, the steps in this embodiment include S701, S702, S703, and S706.

S705: The first network element sends seventh information to the second network element, where the seventh information indicates the second network element to send the sensing data to the AF network element.

The second network element is a network element that collects the sensing data.

In this embodiment of this application, the seventh information includes an identifier of the AF network element, for example, at least one of address information and port information of the AF network element, so that the second network element can send the sensing data to the AF network element.

In some embodiments, if the transmission path indicated by the sixth information is the second transmission path, the first network element may further send eighth information to the second network element, where the eighth information indicates at least one of the following: a transmission protocol used when the second network element sends the sensing data, a media type used when the second network element sends the sensing data, or a message format used when the second network element sends the sensing data. In some embodiments, the data transmission manner of the sensing data may alternatively be preset. Correspondingly, after the first network element determines the data transmission manner, the first network element may not send the eighth information to the second network element. In this case, the second network element transmits the sensing data in the preset data transmission manner. That is, the eighth information is optional information.

Optionally, the first network element may further send, to the second network element, indication information indicating the transmission path.

It should be understood that in this embodiment, the first network element further needs to be capable of learning of the data transmission manner supported by the second network element. In an implementation, the first network element may configure in advance the data transmission manner supported by the second network element, so that the data transmission manner determined by the first network element is the data transmission manner that can be supported by the second network element. Alternatively, in another implementation, the second network element may send, to the first network element, information indicating the data transmission manner supported by the second network element.

S706: The second network element sends the sensing data to the AF network element.

Optionally, in the embodiment shown in FIG. 7, S707 and S708 may be further included.

S707: When receiving at least one of the second information, the fourth information, and the sixth information, the first network element sends first sensing data subscription response information to the NEF network element, and the NEF network element receives the first sensing data subscription response information, where the first sensing data subscription response information indicates that sensing data/sensing information subscription of the AF network element succeeds or fails.

In some embodiments, when the first network element sends the first sensing data subscription response information to the NEF network element, the first sensing data subscription response information may further include fifth information, and the fifth information indicates at least one of the following: a transmission protocol used when the first network element sends the sensing data, a media type used when the first network element sends the sensing data, and a message format used when the first network element sends the sensing data.

In some embodiments, the network elements may alternatively negotiate in advance the transmission manner used when the sensing data is transmitted. In this case, when the first network element sends the sensing data subscription response information to the NEF network element, the sensing data subscription response information does not include the fifth information. Correspondingly, the NEF network element receives, based on the default transmission manner, the sensing data sent by the first network element.

S708: The NEF network element sends second sensing data subscription response information to the AF network element, to indicate that sensing data/sensing information subscription of the AF network element succeeds or fails.

Optionally, the first sensing data subscription response information and the second sensing data subscription response information may further include at least one of address information and port information of the second network element, so that the AF network element learns of the second network element, and can directly request the sensing data from the second network element.

It may be learned that in the solution provided in this embodiment of this application, the NEF network element determines the transmission path of the sensing data, and then indicates the transmission path to the first network element, so that the first network element controls transmission of the sensing data.

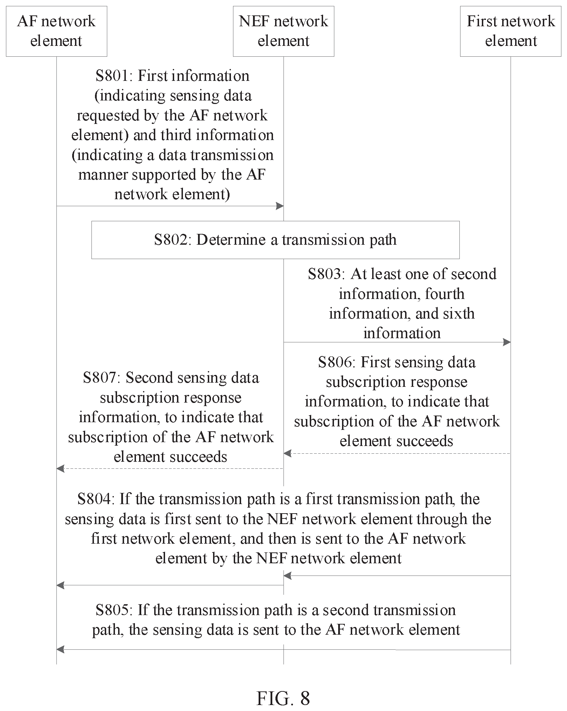

With reference to FIG. 8, the following describes a communication method for transmitting sensing data based on a transmission path determined by an NEF network element in the architecture shown in FIG. 6. As shown in FIG. 8, the method includes the following steps.

S801: An AF network element sends first information and third information to an NEF network element, where the first information is used to request to subscribe to sensing data, and the third information indicates a data transmission manner supported by the AF network element.

Optionally, in some embodiments, when there is a default data transmission manner, the third information in this embodiment is optional.

S802: The NEF network element determines a transmission path, where the transmission path includes a first transmission path or a second transmission path.

S803: The NEF network element sends at least one of second information, fourth information, and sixth information to the first network element, and the NEF network element receives at least one of the second information, the fourth information, and the sixth information, where the sixth information indicates the transmission path determined by the NEF network element.

Optionally, in some embodiments, when there is a default data transmission manner, the fourth information in this embodiment is optional.

In this embodiment of this application, if the transmission path determined by the NEF network element is the first transmission path, the manner of transmitting the sensing data includes S804. Alternatively, in other words, when the transmission path determined by the NEF network element is the first transmission path, the steps in this embodiment include S801 to S804.

S804: The first network element collects the sensing data requested by the AF network element and sends the sensing data to the NEF network element, and then the NEF network element sends the sensing data to the AF network element.

In this embodiment of this application, if the transmission path determined by the NEF network element is the second transmission path, the manner of transmitting the sensing data includes S805. Alternatively, in other words, when the transmission path determined by the NEF network element is the second transmission path, the steps in this embodiment include S801, S802, S803, and S805.

S805: The first network element sends the sensing data to the AF network element.

In this embodiment, the first network element is a network element that collects the sensing data.

Optionally, in some embodiments, if the transmission path indicated by the sixth information is the second transmission path, the first network element may further indicate, to the AF network element, at least one of the following: a transmission protocol used when the first network element sends the sensing data, a media type used when the first network element sends the sensing data, or a message format used when the first network element sends the sensing data.

Optionally, in some embodiments, the data transmission manner of the sensing data may alternatively be preset. Correspondingly, the first network element sends the sensing data based on the preset data transmission manner, and the AF network element receives the sensing data in the preset data transmission manner.

Optionally, the first network element may further indicate at least one of the following information to the AF network element: address information of the first network element and port information of the first network element.

Optionally, in the embodiment shown in FIG. 8, before S804 or S805, S806 and S807 may be further included.

S806: When receiving at least one of the second information, the fourth information, and the sixth information, the first network element sends first sensing data subscription response information to the NEF network element, and the NEF network element receives the first sensing data subscription response information, where the first sensing data subscription response information indicates that sensing data/sensing information subscription of the AF network element succeeds or fails.

S807: The NEF network element sends second sensing data subscription response information to the AF network element, to indicate that sensing data/sensing information subscription of the AF network element succeeds or fails.

For detailed descriptions of S806 and S807, refer to S707 and S708 in the embodiment shown in FIG. 7. Details are not described herein again.

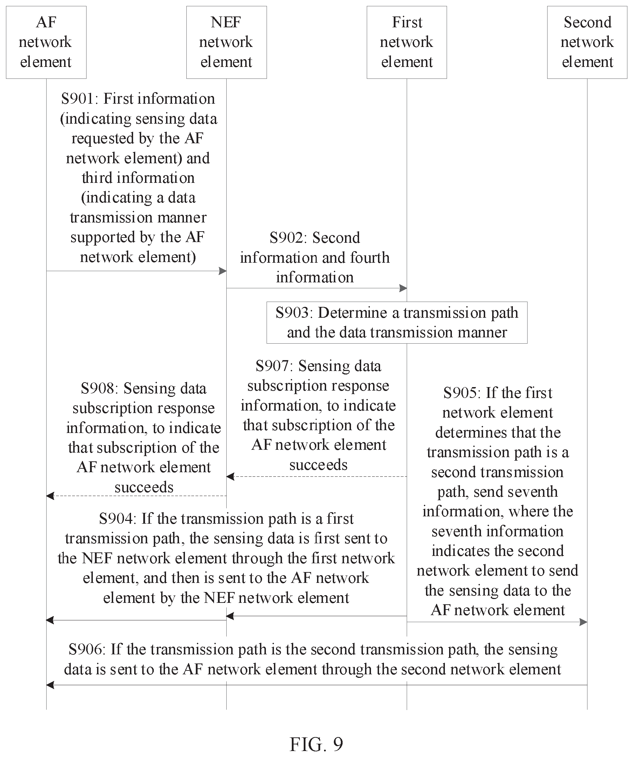

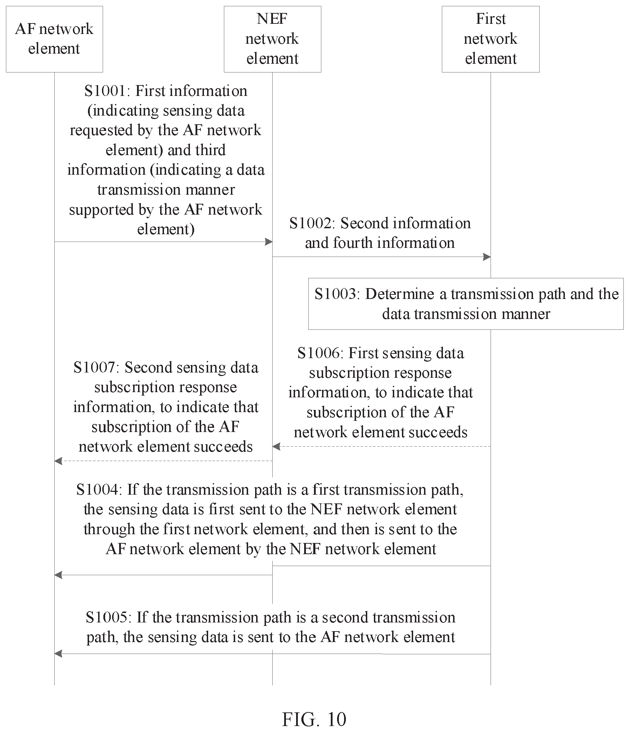

In an optional embodiment, the first network element may alternatively determine the transmission path of the sensing data. With reference to FIG. 9 and FIG. 10, the following describes two embodiments in which a first network element determines a transmission manner of sensing data.

Specifically, FIG. 9 shows an embodiment in which a first network element determines a transmission path and a transmission method of sensing data when the first network element controls a second network element and obtains the sensing data from the second network element. FIG. 10 shows an embodiment in which a first network element determines a transmission path and a transmission method of sensing data when the first network element collects the sensing data.

As shown in FIG. 9, that the first network element determines the transmission path and the transmission method of the sensing data includes the following steps.

S901: An AF network element sends first information and third information to an NEF network element, where the first information is used to request to subscribe to the sensing data, and the third information indicates a data transmission manner supported by the AF.

Optionally, in some embodiments, when there is a default data transmission manner, the third information in this embodiment is optional.

S902: The NEF network element sends second information and fourth information to the first network element, and the first network element receives the second information and the fourth information.

Optionally, in some embodiments, when there is a default data transmission manner, the fourth information in this embodiment is optional.

S903: The first network element determines the transmission path and the data transmission manner.

In this embodiment, the transmission path includes a first transmission path and a second transmission path. In this embodiment, the transmission path determined by the first network element is either the first transmission path or the second transmission path. Alternatively, in other words, the transmission path determined by the first network element is one of the first transmission path and the second transmission path.

In this embodiment, the data transmission manner includes, for example, a transmission protocol, a message format, a media type, and the like used when the sensing data is transmitted.

Specifically, for detailed descriptions of the first transmission path, the second transmission path, and the data transmission manner, refer to the descriptions in the foregoing embodiments. Details are not described herein again.

In this embodiment of this application, a difference from the embodiments in FIG. 7 and FIG. 8 is that the transmission path is determined by the first network element instead of the NEF network element.

It should be noted herein that a manner of determining a transmission path by the first network element is not limited in this embodiment.

In an implementation, determining may be performed based on a delay requirement of the requested sensing data and a data volume of the requested sensing data.

For example, if the sensing data subscribed to by the AF has a high real-time requirement, it may be determined that the transmission path is the second transmission path. If the sensing data subscribed to by the AF has a low real-time requirement, it may be determined that the transmission path is the second transmission path.

For example, if the sensing data subscribed to by the AF is of a large data volume, it may be determined that the transmission path is the second transmission path.

In an implementation, determining may be performed based on a sensing service type/event type of the requested sensing data. For example, a correspondence between each sensing service type/sensing event type and a transmission path may be preset in advance, and then the first network element determines, based on the correspondence, the transmission path that needs to be used for the requested sensing data.

In this embodiment of this application, if the transmission path determined by the first network element is the first transmission path, the manner of transmitting the sensing data includes S904. Alternatively, in other words, when the transmission path determined by the NEF network element is the first transmission path, the steps in this embodiment include S901 to S904.

S904: The first network element obtains the sensing data from the second network element and sends the sensing data to the NEF network element, and then the NEF network element sends the sensing data to the AF network element.

For descriptions of this step, refer to S704 in the embodiment in FIG. 7. Details are not described herein again.

In this embodiment of this application, if the transmission path determined by the first network element is the second transmission path, the manner of transmitting the sensing data includes S905 and S906. Alternatively, in other words, when the transmission path determined by the NEF network element is the second transmission path, the steps in this embodiment include S901, S902, S903, S905, and S906.

S905: The first network element sends seventh information to the second network element, where the seventh information indicates the second network element to send the sensing data to the AF network element.

S906: The second network element sends the sensing data to the AF network element.

For S905 and S906, refer to S90 in the embodiment in FIG. 7. For detailed descriptions of this step, refer to S7056 and S706 in the embodiment shown in FIG. 7. Details are not described herein again.

Optionally, in the embodiment shown in FIG. 9, S907 and S908 may be further included.

S907: When receiving at least one of the second information, the fourth information, and the sixth information, the first network element sends first sensing data subscription response information to the NEF network element, and the NEF network element receives the first sensing data subscription response information, where the first sensing data subscription response information indicates that sensing data/sensing information subscription of the AF network element succeeds or fails.

S908: The NEF network element sends second sensing data subscription response information to the AF network element, to indicate that sensing data/sensing information subscription of the AF network element succeeds or fails.

For detailed descriptions of S907 and S908, refer to the descriptions of S707 and S708 in the embodiment shown in FIG. 7. Details are not described herein again.

It may be learned that in the embodiment shown in FIG. 9, the first network element determines the transmission path of the sensing data, and then transmits the sensing data based on the determined transmission path.

Optionally, in the embodiment shown in FIG. 9, the second sensing data subscription response information in step S907 and the second sensing data subscription response information in step S908 may further include an identifier indicating the second network element, for example, include at least one of address information and port information of the second network element, so that the AF learns of the second network element, and can directly send, to the second network element, other information used to request to subscribe to the sensing data. Alternatively, in other words, in this implementation, when the AF needs to actively interact with the second network element, the AF network element may directly send information to the second network element.

With reference to FIG. 10, the following describes a communication method for transmitting sensing data based on a transmission path determined by an NEF network element in the architecture shown in FIG. 6. As shown in FIG. 10, the method includes the following steps.

S1001: An AF network element sends first information and third information to an NEF network element, where the first information is used to request to subscribe to sensing data, and the third information indicates a data transmission manner supported by the AF network element.

Optionally, in some embodiments, when there is a default data transmission manner, the third information in this embodiment is optional.

S1002: The NEF network element sends second information and fourth information to a first network element, and the first network element receives the second information and the fourth information.

Optionally, in some embodiments, when there is a default data transmission manner, the fourth information in this embodiment is optional.

S1003: The first network element determines the transmission path and the data transmission manner.

For detailed descriptions of S1001 to S003, refer to the descriptions in the foregoing embodiments. Details are not described herein again.

In this embodiment of this application, if the transmission path determined by the NEF network element is a first transmission path, the manner of transmitting the sensing data includes S1004. Alternatively, in other words, when the transmission path determined by the NEF network element is the first transmission path, the steps in this embodiment include S1001 to S1004.

S1004: The first network element collects the sensing data requested by the AF network element and sends the sensing data to the NEF network element, and then the NEF network element sends the sensing data to the AF network element.

For detailed descriptions of this step, refer to the detailed descriptions of S804. Details are not described herein again.

In this embodiment of this application, if the transmission path determined by the first network element is a second transmission path, the manner of transmitting the sensing data includes S1005. Alternatively, in other words, when the transmission path determined by the first network element is the second transmission path, the steps in this embodiment include S1001, S1002, S1003, and S1005.

S1005: The first network element sends the sensing data to the AF network element.

For detailed descriptions of this step, refer to the detailed descriptions of S805. Details are not described herein again.

Optionally, in the embodiment shown in FIG. 8, before S804 or S805, S806 and S807 may be further included.

S1006: When receiving at least one of the second information, the fourth information, and sixth information, the first network element sends first sensing data subscription response information to the NEF network element, and the NEF network element receives the first sensing data subscription response information, where the first sensing data subscription response information indicates that sensing data/sensing information subscription of the AF network element succeeds or fails.

S1007: The NEF network element sends second sensing data subscription response information to the AF network element, to indicate that sensing data/sensing information subscription of the AF network element succeeds or fails.

For detailed descriptions of S1006 and S1007, refer to S707 and S708 in the embodiment shown in FIG. 7. Details are not described herein again.

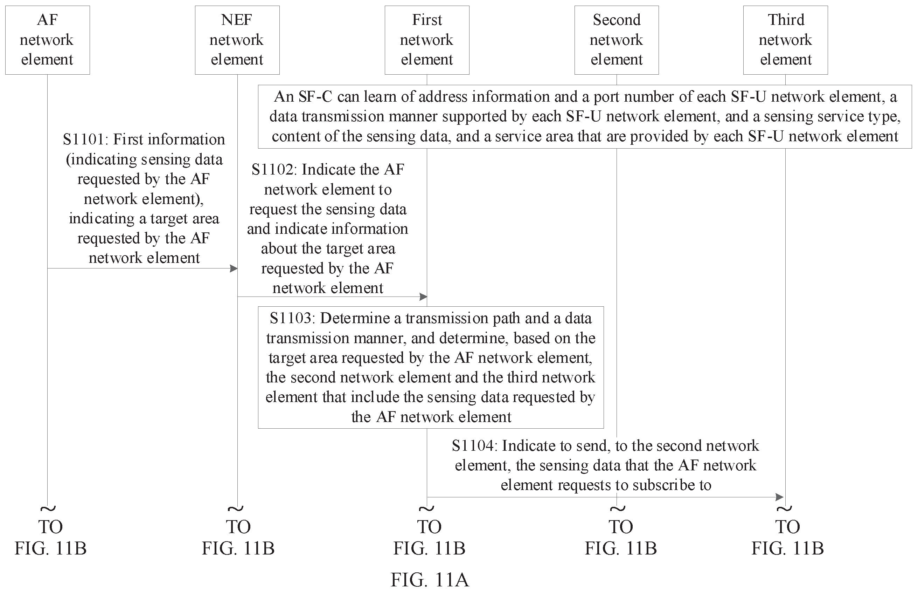

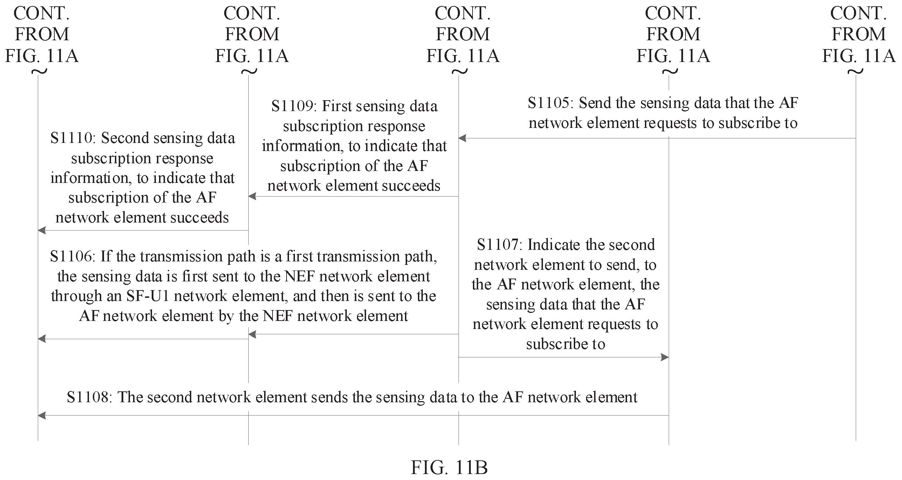

The foregoing describes embodiments that are provided in this application and that are used to expose the sensing data to the AF network element. With reference to FIG. 11A and FIG. 11B, the following further describes a communication method provided in this application.

For ease of description, a network element that can collect sensing data is referred to as a sensing network element (sensing function, SF).

It should be understood that a sensing range corresponding to each SF network element is limited. For example, if a target area requested by the AF network element requires data in a plurality of SF network elements, it is inaccurate to provide sensing data in only one SF network element for the AF network element. Therefore, in this embodiment, an embodiment of how to feed back the sensing data to the AF network element when the target area requested by the AF network element requires the sensing data in the plurality of SFs is described.

With reference to FIG. 11A and FIG. 11B, the following is described by using an example in which an AF network element requests to subscribe to sensing data when sensing is performed on a target area, where the requested sensing data when sensing is performed on the target area may be collected by a second network element and a third network element. That is, a part of the sensing data when sensing is performed on the target area is described by the second network element, and a part of the sensing data is collected by the third network element.

As shown in FIG. 11A and FIG. 11B, the communication method includes the following steps.

S1101: An AF network element sends first information to an NEF network element, where the first information is used to request to subscribe to sensing data, and indicates information about a target area requested by the AF network element.

Optionally, the AF network element may further send second information to the NEF network element, where the second information indicates a data transmission manner supported by the AF network element.

For descriptions of the first information and the second information, refer to the descriptions in the foregoing embodiments. Details are not described herein again.

Specifically, in this embodiment, when requesting to subscribe to the sensing data from the NEF network element, the AF network element further indicates, to the NEF network element, that the sensing data that the AF network element requests to subscribe to is data used when sensing is performed on the target area.

S1102: The NEF network element indicates, to a first network element, that the AF network element requests the sensing data and indicates the information about the target area requested by the AF network element.

S1103: The first network element determines a transmission path and a data transmission manner, and determines, based on the target area requested by the AF network element, a second network element and a third network element that include the sensing data requested by the AF network element.

For the transmission path and the data transmission manner, refer to the descriptions in the foregoing embodiments. Details are not described herein again.

In this embodiment, the second network element and the third network element are network elements that can collect the sensing data.

For example, as shown in FIG. 11A and FIG. 11B, assuming that when the sensing data that the AF network element requests to subscribe to is data used when sensing is performed on the target area, the sensing data that the AF requests to subscribe to is provided by the second network element and the third network element.

It may be understood that in this embodiment, the first network element needs to be capable of learning of a sensed area corresponding to each SF network element.

S1104: The first network element indicates the third network element to send, to the second network element, the sensing data that the AF network element requests to subscribe to. Correspondingly, the second network element receives the sensing data sent by the third network element.

In an implementation, when indicating the third network element to send, to the second network element, the sensing data that the AF network element requests to subscribe to, the first network element may send at least one of address information and port information of the second network element to the third network element, so that the third network element learns of a receive end for sending the sensing data.

In some embodiments, the first network element may further indicate the data transmission manner used when the third network element sends the sensing data. For the data transmission manner, refer to the descriptions in the foregoing embodiments. Details are not described herein again.

Similarly, it may be understood that in this embodiment, the first network element further needs to be capable of learning of the data transmission manner supported by the second network element and the third network element, so that the data transmission manner determined by the first network element is the data transmission manner that can be supported by the second network element and the third network element.

S1105: The third network element sends the sensing data to the second network element.

In this embodiment of this application, if the transmission path determined by the first network element is a first transmission path, S1106 is performed; or if the transmission path determined by the first network element is a second transmission path, S1107 and S1108 are performed.

S1106: The first network element obtains the sensing data from the second network element and sends the sensing data to the NEF network element, and then the NEF network element sends the sensing data to the AF network element.

It should be understood that the sensing data obtained by the first network element from the second network element further includes the sensing data that is requested by the AF network element and that is included in the third network element, in addition to the sensing data that is requested by the AF network element and that is originally included in the second network element.

S1107: The first network element indicates the second network element to send, to the AF network element, the sensing data that the AF network element requests to subscribe to.

S1108: The second network element sends the sensing data to the AF network element.

Similarly, it may be understood that when the second network element sends the sensing data to the AF network element, because the second network element receives the sensing data that is requested by the AF network element and that is sent by the third network element, when the second network element sends the sensing data to the AF network element, the sent sensing data further includes the sensing data that is requested by the AF network element and that is collected by the third network element, in addition to the sensing data that is requested by the AF network element and that is collected by the second network element.

Optionally, the method may further include the following steps.

S1109: The first network element sends first sensing data subscription response information to the NEF network element, and the NEF network element receives the sensing data subscription response information, where the sensing data subscription response information indicates that subscription of the AF network element succeeds or fails.

In this embodiment, assuming that the sensing data subscription response information indicates that subscription of the AF network element succeeds.

S1110: The NEF network element sends second sensing data subscription response information to the AF network element.

For S1109 and S1110, refer to detailed descriptions of the first sensing data subscription response information and the second sensing data subscription response information in the foregoing embodiments. Details are not described herein again.

Optionally, the first network element in this application may send the sensing data to the NEF network element through a UDM network element. That is, the first network element first sends the sensing data to the UDM network element, and then the UDM network element sends the sensing data to the NEF network element.

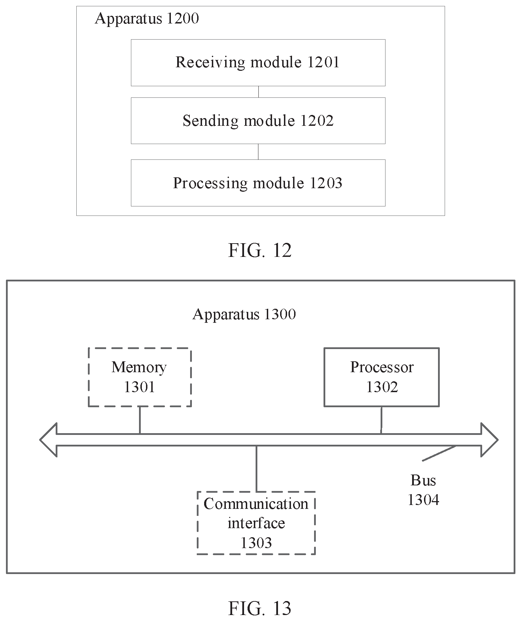

The foregoing describes in detail the communication method in embodiments of this application with reference to FIG. 5 to FIG. 11A and FIG. 11B. The following describes in detail a communication apparatus provided in this application with reference to FIG. 12 and FIG. 13.

FIG. 12 is a diagram of a structure of a communication apparatus according to an embodiment of this application. Specifically, as shown in FIG. 12, the apparatus 1200 includes a receiving module 1201 and a sending module 1202.

In a first embodiment, the communication apparatus is used for an NEF network element.

Specifically, in the first embodiment, the receiving module 1201 is configured to receive sensing data from a first network element; and the sending module 1202 is configured to send the sensing data to an application function AF network element.

In a possible implementation, the receiving module 1201 is further configured to receive first information from the AF network element, where the first information indicates the AF network element to request to subscribe to the sensing data; and the sending module 1202 is further configured to send second information to the first network element, where the second information indicates the AF network element to request to subscribe to the sensing data.

In a possible implementation, the first information and the second information include first indication information, and the first indication information indicates a sensing service type of the sensing data that is requested to be subscribed to.

In a possible implementation, the first information and the second information include second indication information, and the second indication information indicates content to be included in the sensing data that is requested to be subscribed to.

In a possible implementation, the receiving module 1201 is further configured to receive third information from the AF network element, where the third information indicates at least one of the following: a transmission protocol supported by the AF network element, a media type supported by the AF network element, or a message format supported by the AF network element; and the sending module 1202 is further configured to send fourth information to the first network element, where the fourth information indicates at least one of the following: a transmission protocol supported by the AF network element, a media type supported by the AF network element, or a message format supported by the AF network element.

In a possible implementation, the receiving module 1201 is further configured to receive fifth information from the first network element, where the fifth information indicates at least one of the following: a transmission protocol used when the first network element sends the sensing data, a media type used when the first network element sends the sensing data, or a message format used when the first network element sends the sensing data; and the receiving module 1201 is further configured to receive the sensing data from the first network element based on the fifth information.

In a possible implementation, the sending module 1202 is further configured to send sixth information to the first network element, where the sixth information indicates a transmission path of the sensing data, the transmission path is a first transmission path or a second transmission path, the first transmission path is that the sensing data is sent to the NEF network element through the first network element and then sent to the AF network element by the NEF network element, and the second transmission path is that the sensing data is sent to the AF network element by a network element that collects the sensing data; and the receiving module 1201 is further configured to: when the transmission path indicated by the sixth information is the first transmission path, receive the sensing data from the first network element.

In a second embodiment, the communication apparatus is used for a first network element.

Specifically, in the second embodiment, the sending module 1202 is configured to send sensing data to a network exposure function NEF network element.

In a possible implementation, the receiving module 1201 is configured to receive second information from the NEF network element, where the second information indicates an application function AF network element to request to subscribe to the sensing data.

In a possible implementation, the second information includes first indication information, and the first indication information indicates a sensing service type of the sensing data that is requested to be subscribed to.

In a possible implementation, the second information includes second indication information, and the second indication information indicates content to be included in the sensing data that is requested to be subscribed to.

In a possible implementation, the receiving module 1201 is further configured to receive fourth information from the NEF network element, where the fourth information indicates at least one of the following: a transmission protocol supported by the AF network element, a media type supported by the AF network element, or a message format supported by the AF network element.

In a possible implementation, the sending module 1202 is further configured to send fifth information to the NEF network element, where the fifth information indicates at least one of the following: a transmission protocol used when the first network element sends the sensing data, a media type used when the first network element sends the sensing data, or a message format used when the first network element sends the sensing data; and the sending module 1202 is further configured to send the sensing data to the NEF network element based on the fifth information.

In a possible implementation, the apparatus further includes a processing module 1203. The processing module 1203 is further configured to determine a transmission path of the sensing data, where the transmission path is a first transmission path or a second transmission path, the first transmission path is that the sensing data is sent to the NEF network element through the first network element and then sent to the AF network element by the NEF network element, and the second transmission path is that the sensing data is sent to the AF network element by a network element that collects the sensing data; and the sending module 1202 is further configured to: when the transmission path is the first transmission path, send the sensing data to the NEF network element.

In a possible implementation, the receiving module 1201 is further configured to receive sixth information from the NEF network element, where the sixth information indicates the transmission path.

In a possible implementation, the sending module 1202 is further configured to: if it is determined that the transmission path of the sensing data is the second transmission path, send the sensing data to the AF network element or send seventh information to the second network element, where the seventh information indicates the second network element to send the sensing data to the AF network element, and the seventh information includes an identifier of the AF network element.

In a possible implementation, the sending module 1202 is further configured to send eighth information to the second network element, where the eighth information indicates at least one of the following: a transmission protocol used when the second network element sends the sensing data, a media type used when the second network element sends the sensing data, or a message format used when the second network element sends the sensing data.

In a possible implementation, the sending module 1202 is further configured to send ninth information to the AF network element through the NEF network element, where the ninth information indicates an identifier of the second network element.

In a third embodiment, the communication apparatus is used for an application function AF network element.

Specifically, in the third embodiment, the sending module 1202 is configured to send first information to a network exposure function NEF network element, where the first information indicates the AF network element to request to subscribe to sensing data; and the receiving module 1201 is configured to receive the sensing data sent by the NEF network element.

In a possible implementation, the first information includes first indication information, and the first indication information indicates a sensing service type of the sensing data that is requested to be subscribed to.

In a possible implementation, the first information includes second indication information, and the second indication information indicates content to be included in the sensing data that is requested to be subscribed to.

FIG. 13 is a diagram of a structure of a communication apparatus according to another embodiment of this application. The apparatus shown in FIG. 13 may be configured to perform the method according to any one of the foregoing embodiments.

As shown in FIG. 13, the apparatus 1300 in this embodiment includes a memory 1301 and a processor 1302. Optionally, the apparatus 1300 further includes a communication interface 1303 and a bus 1304. Communication connections between the memory 1301, the processor 1302, and the communication interface 1303 are implemented through the bus 1304.

The memory 1301 may be a read-only memory (read-only memory, ROM), a static storage device, a dynamic storage device, or a random access memory (random access memory, RAM). The memory 1301 may store a program. When the program stored in the memory 1301 is executed by the processor 1302, the processor 1302 is configured to perform the steps of the methods shown in FIG. 4 to FIG. 11A and FIG. 11B.

The processor 1302 may be a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 4 to FIG. 11A and FIG. 11B in this application.

The processor 1302 may alternatively be an integrated circuit chip and has a signal processing capability. In an implementation process, the steps of the methods in FIG. 4 to FIG. 11A and FIG. 11B in embodiments of this application may be completed by using an integrated logic circuit of hardware in the processor 1302 or by using instructions in a form of software.

The processor 1302 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1301. The processor 1302 reads information in the memory 1301, and completes, in combination with hardware of the processor 1302, functions that need to be performed by units included in the apparatus in this application. For example, the processor 1302 may perform steps/functions in the embodiments shown in FIG. 4 to FIG. 11A and FIG. 11B.

The communication interface 1303 may use, but not limited to, a transceiver apparatus such as a transceiver, to implement communication between the apparatus 1300 and another device or a communication network.

The bus 1304 may include a path for information transmission between various components (for example, the memory 1301, the processor 1302, and the communication interface 1303) of the apparatus 1300.

It should be understood that the apparatus 1300 shown in this embodiment of this application may be an electronic device, or may be a chip configured in an electronic device. The apparatus 1300 may be deployed in a terminal device, or may be deployed in a network device.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the method described in embodiments of this application. The foregoing storage medium includes: any medium that can store program code, for example, a USB flash drive, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a network exposure function NEF network element, and comprising:
receiving sensing data from a first network element; and
sending the sensing data to an application function AF network element.

2. The method according to claim 1, wherein the method further comprises:
receiving first information from the AF network element, wherein the first information indicates the AF network element to request to subscribe to the sensing data; and
sending second information to the first network element, wherein the second information indicates the AF network element to request to subscribe to the sensing data.

3. The method according to claim 2, wherein the first information and the second information comprise first indication information, and the first indication information indicates a sensing service type of the sensing data that is requested to be subscribed to.

4. The method according to claim 3, wherein the first information and the second information comprise second indication information, and the second indication information indicates content to be comprised in the sensing data that is requested to be subscribed to.

5. The method according to any one of claims 2 to 4, wherein the method further comprises:
receiving third information from the AF network element, wherein the third information indicates at least one of the following: a transmission protocol supported by the AF network element, a media type supported by the AF network element, or a message format supported by the AF network element; and
sending fourth information to the first network element, wherein the fourth information indicates at least one of the following: a transmission protocol supported by the AF network element, a media type supported by the AF network element, or a message format supported by the AF network element.

6. The method according to claim 5, wherein the method further comprises:
receiving fifth information from the first network element, wherein the fifth information indicates at least one of the following: a transmission protocol used when the first network element sends the sensing data, a media type used when the first network element sends the sensing data, or a message format used when the first network element sends the sensing data; and
receiving the sensing data from the first network element comprises:
receiving the sensing data from the first network element based on the fifth information.

7. The method according to any one of claims 1 to 6, wherein the method further comprises:
sending sixth information to the first network element, wherein the sixth information indicates a transmission path of the sensing data, the transmission path is a first transmission path or a second transmission path, the first transmission path is that the sensing data is sent to the NEF network element through the first network element and then sent to the AF network element by the NEF network element, and the second transmission path is that the sensing data is sent to the AF network element by a network element that collects the sensing data; and
receiving the sensing data from the first network element comprises:
when the transmission path indicated by the sixth information is the first transmission path, receiving the sensing data from the first network element.

8. A communication method, applied to a first network element, and comprising:
sending sensing data to a network exposure function NEF network element.

9. The method according to claim 8, wherein the method further comprises:
receiving second information from the NEF network element, wherein the second information indicates an application function AF network element to request to subscribe to the sensing data.

10. The method according to claim 9, wherein the second information comprises first indication information, and the first indication information indicates a sensing service type of the sensing data that is requested to be subscribed to.

11. The method according to claim 10, wherein the second information comprises second indication information, and the second indication information indicates content to be comprised in the sensing data that is requested to be subscribed to.

12. The method according to any one of claims 8 to 11, wherein the method further comprises:
receiving fourth information from the NEF network element, wherein the fourth information indicates at least one of the following: a transmission protocol supported by the AF network element, a media type supported by the AF network element, or a message format supported by the AF network element.

13. The method according to claim 12, wherein the method further comprises:
sending fifth information to the NEF network element, wherein the fifth information indicates at least one of the following: a transmission protocol used when the first network element sends the sensing data, a media type used when the first network element sends the sensing data, or a message format used when the first network element sends the sensing data; and
sending the sensing data to the network exposure function NEF network element comprises:
sending the sensing data to the NEF network element based on the fifth information.

14. The method according to any one of claims 8 to 13, wherein the method further comprises:
determining a transmission path of the sensing data, wherein the transmission path is a first transmission path or a second transmission path, the first transmission path is that the sensing data is sent to the NEF network element through the first network element and then sent to the AF network element by the NEF network element, and the second transmission path is that the sensing data is sent to the AF network element by a network element that collects the sensing data; and
sending the sensing data to the network exposure function NEF network element comprises:
when the transmission path is the first transmission path, sending the sensing data to the NEF network element.

15. The method according to claim 14, wherein determining the transmission path of the sensing data comprises:
receiving sixth information from the NEF network element, wherein the sixth information indicates the transmission path.

16. The method according to claim 14 or 15, wherein the method further comprises:
if it is determined that the transmission path of the sensing data is the second transmission path, sending the sensing data to the AF network element or sending seventh information to the second network element, wherein the seventh information indicates the second network element to send the sensing data to the AF network element, and the seventh information comprises an identifier of the AF network element.

17. The method according to claim 16, wherein the method further comprises:
sending eighth information to the second network element, wherein the eighth information indicates at least one of the following: a transmission protocol used when the second network element sends the sensing data, a media type used when the second network element sends the sensing data, or a message format used when the second network element sends the sensing data.

18. The method according to claim 16 or 17, wherein the method further comprises:
sending ninth information to the AF network element through the NEF network element, wherein the ninth information indicates an identifier of the second network element.

19. A communication method, applied to an application function AF network element, and comprising:
sending first information to a network exposure function NEF network element, wherein the first information indicates the AF network element to request to subscribe to sensing data; and
receiving the sensing data sent by the NEF network element.

20. The method according to claim 19, wherein the first information comprises first indication information, and the first indication information indicates a sensing service type of the sensing data that is requested to be subscribed to.

21. The method according to claim 20, wherein the first information comprises second indication information, and the second indication information indicates content to be comprised in the sensing data that is requested to be subscribed to.

22. A communication apparatus, comprising a processor, wherein
the processor is configured to execute a computer program and/or enable the communication apparatus to implement the method according to any one of claims 1 to 7 by using a logic circuit.

23. A communication apparatus, comprising a processor, wherein
the processor is configured to execute a computer program and/or enable the communication apparatus to implement the method according to any one of claims 8 to 18 by using a logic circuit.

24. A communication apparatus, comprising a processor, wherein
the processor is configured to execute a computer program and/or enable the communication apparatus to implement the method according to any one of claims 19 to 21 by using a logic circuit.

25. A communication system, comprising the communication apparatus according to any one of claims 23 and 24.

26. A computer-readable medium, wherein the computer-readable medium stores program code to be executed by a computer, and the program code comprises instructions used to perform the method according to any one of claims 1 to 7, claims 8 to 18, or claims 19 to 21.

27. A computer program product, wherein the computer program product comprises computer program code; and when the computer program code is run on a computer, the computer is enabled to implement the method according to any one of claims 1 to 7, claims 8 to 18, or claims 19 to 21.

28. A chip, comprising at least one processor and a communication interface, wherein the communication interface and the at least one processor are interconnected through a line, and the at least one processor is configured to run a computer program or instructions, to perform the communication method according to any one of claims 1 to 7, claims 8 to 18, or claims 19 to 21.
